# EUROPEAN PATENT APPLICATION

(11) **EP 4 521 026 A1**
(43) Date of publication of application: **12.03.2025**
(21) Application number: 24198169.5
(22) Date of filing: 03.09.2024
(51) Int. Cl.: F24D 3/08, F24D 11/02, F24D 17/00, F24D 17/02, F24D 19/10, F24H 1/18, F24H 15/219, F24H 15/223, F24H 15/238, F24H 15/355, F24H 15/375

(54) **WATER HEATING SYSTEM CONTAINING A NON-PRESSURIZED HEAT ACCUMULATOR, BUILDING WALL CONTAINING SAID NON-PRESSURIZED HEAT ACCUMULATOR AND WATER HEATING METHOD USING SAID WATER HEATING SYSTEM**

(30) Priority: 06.09.2023 RO 202300489
(71) Applicant: Zamfir, Nicolae-Florin, Sat Corbeanca (Comuna Corbeanca) Jud. Ilfov (RO); Gaman, Emanuel, Municipiul Piatra Neamt, Judetul Neamt (RO)
(72) Inventor: Zamfir, Nicolae-Florin, Corbeanca (RO)
(74) Representative: Vasilescu, Raluca

(57) **Abstract**

The invention relates to a water heating system comprising a heat accumulator, a first heat exchanger (SCH ACM), a second heat exchanger (SCH PC, SCH PS), a third heat exchanger (SCH CCG, SCH CCL) and one or more heat sources (PC, CCG, PS, CCL),
Wherein:
The heat accumulator (AT) casing, in the working position, is configured to allow a volume of safety air to escape from the casing through an overflow port (PP) to maintain a primary heating agent in a non-pressurized form.

The heat accumulator (AT) is configured to be mounted inside or in place of a building wall.

The water heating system is configured to heat the primary heating agent to obtain domestic hot water.

The invention further relates to a method of using a water heating system, the method comprising the step of heating the primary heating agent in the heat accumulator followed by the step of obtaining domestic hot water.

The invention relates to a water heating system comprising a non-pressurized heat accumulator (AT), a building wall containing the non-pressurized heat accumulator and a water heating method using said water heating system. According to the invention, the water heating system comprises a heat accumulator (AT), a first heat exchanger (SCH ACM), a second heat exchanger (SCH PC, SCH PS), a third heat exchanger (SCH CCG, SCH CCL) and one or more heat sources (PC, CCG, PS 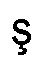 i CCL), where the casing of the heat accumulator (AT), in work position, is configured to allow the discharge of a safety air volume from the casing through an overflow port (PP) in order to keep a primary heating agent in non-pressurized form, and the heat accumulator (AT) is configured to be mounted inside or instead of a building wall, the water heating system being configured to heat the primary heating agent in order to produce domestic hot water. The claimed method for using the system comprises the step of heating the primary heating agent in the accumulator followed by the step of producing domestic hot water.

## Description

### Field of the invention

The invention relates to a non-pressurized heat accumulator and to a building wall containing said heat accumulator. Furthermore, the invention relates to a water heating system using said heat accumulator and to water heating methods using said water heating system.

### Background of the invention

In the prior art, solutions are known for heat accumulating tanks (such as boiler, puffer) which are highly insulated hot water tanks with the purpose of storing the thermal energy supplied by hot water generating devices (such as boiler, solar collector, etc.) for later use. The heat produced and stored in this way can be used for heating buildings and producing hot water at any time.

In some cases, the accumulating tank is an indispensable equipment. This is because a long period of time may pass between the production and use of thermal energy, and the process of producing energy requires a certain amount of time. During the operating of solid fuel (coal, wood, pellets) boilers, the generated but unused thermal energy is stored also in the accumulating tank, so that the fuel can burn and not produce excess smoke, as the boiler does not have to be closed after the building has been heated.

The heating system provided with an expansion vessel is known in the prior art. In the event of an uncontrolled increase in temperature, the pressure increases and the expansion vessel takes over the excess liquid due to the expansion, maintaining the pressure within functional limits.

### Disadvantages of prior art

Some of the disadvantages contained in the prior art are as follows:
- The heat accumulating tanks (boiler, puffer) in prior art have a risk of explosion due to the high pressure resulting from the increase of water temperature inside;
- The heat accumulating tanks included in the prior art take up a lot of space (e.g. in rooms, kitchens, bathrooms, garages, technical rooms, etc.), which space could be used for other purposes;
- In the case of households, guesthouses, hotels, etc. that use wood or other solid fuels for central heating, it is mandatory to provide a special building or enclosures, at a preset distance, to place the accumulating tanks, which leads to an increase in costs.

### The technical problem solved by the invention

The technical problem solved by the invention is to provide a heat accumulator for production and storage of hot water, which does not present a danger of explosion and whose location allows both the saving of space in a building and the reduction of construction costs.

### Summary of the invention

In order to overcome the disadvantages of the prior art, a first object of the invention is a water heating system characterized in that it comprises:
a heat accumulator AT, a first heat exchanger SCH ACM, a second heat exchanger, a third heat exchanger and one or more heat sources, wherein:
- the heat accumulator AT for the production and storage of hot water comprises
   ∘ a stiffened and thermally insulated closed parallelepipedic casing, filled with a permanently non-pressurized primary heating agent, and
   ∘ command and control means,
- the first heat exchanger SCH ACM is connected, on the one hand, to the heat accumulator AT via a first circulation pump PC1 provided in a domestic hot water heating circuit CIA 1 and, on the other hand, to a domestic hot water consuming circuit CC ACM, which is equipped with a flow sensor FLX1 and an electric outlet valve EVG
- the second heat exchanger is connected on one hand to the heat accumulator AT via a second circulation pump and on the other hand to the heat source PC, PS
- the third heat exchanger is connected on one hand to the heat accumulator AT via a third circulation pump and on the other hand to the heat source
- the heat source is configured to allow the flow of a secondary heating medium, the heat source being provided with a sensor for monitoring the temperature of the secondary heating medium.

In working position, the casing is configured to:
- comprise a control zone ZC located on a side face of the casing, along a vertical edge of that face,
- allow to be filled with unheated primary heating agent by filling means EVU up to a preset filling level and also to allow the heated primary heating agent expanding up to a preset expanding level between the preset filling level and an overflow port PP, said overflow port PP being located in the wall of the casing, in the control zone ZC, between the preset expanding level and the top face of the casing,
- contain a safety air volume between the preset filling level and the top face of the casing,
- allow the circulation of the primary heating agent through a series of circulation openings in the respective side face of the casing as follows:
   ∘ between the heat accumulator AT and the first heat exchanger SCH ACM via a domestic hot water heating circuit CIA1, and
   ∘ between the heat accumulator AT and the second heat exchanger via a first heating circuit for primary heating agent and/or between the heat accumulator AT and the third heat exchanger via a second heating circuit for primary heating medium.

The command and control means comprise a set of temperature command and control means MCC1 of the heat accumulator AT, mounted in the middle part of the control zone ZC.

In the working position the casing is configured to allow the safety air volume to be exhausted from the casing through the overflow port PP, in order to maintain the primary heating agent in non-pressurized form.

The heat accumulator AT is configured to be mounted inside of or instead of a building wall.

The water heating system is configured to heat the primary heating agent in order to obtain domestic hot water.

In one aspect of the invention, a water heating system is disclosed, further comprising:
at least one first pipe in the form of a coil inside the heat accumulator configured to allow circulation of the secondary heating medium, and
at least one second pipe in the form of a coil located within the heat accumulator and configured to allow the circulation of the source of cold water (ARS),

The first coil wound pipe is configured to be connected with a heat source (PC, CCG, PS, CCL) for the purpose of heating or cooling the primary heating medium.

The second coil wound pipe is configured to be connected with a source of cold water (ARS) for the purpose of heating the cold water (ARS) for obtaining domestic hot water (ACM).

The inlet end and the outlet end of the first and second coil wound pipes are located at the upper side of the heat accumulator.

In another aspect of the invention there is disclosed a building wall containing the heat accumulator AT of the system according to the first object of the invention.

A second object of the invention is a method of filling the accumulator AT casing with the primary heating medium, comprising the filling of the accumulator AT casing with the primary heating agent by filling means EVU up to a preset filling level.

A third object of the invention is a water heating method having three alternatives, as follows:

The first alternative of the third object of the invention comprises a method of heating the water, using the heat pump PC and the conventional gas central heating CCG as heat sources, the method comprising the following steps:
(a) the step of heating the primary heating agent in the accumulator AT; and
(b) the step of producing domestic hot water ACM.

The second alternative of the third object of the invention comprises a method for using the water heating system, using the solar panels PS and the conventional wood central heating CCL as heat sources, the method comprising the following steps:
(a) the step of heating the primary heating agent in the accumulator AT; and
(b) the step of producing domestic hot water ACM.

The third alternative of the third object of the invention comprises a method for using the water heating system, using the heat pump PC and the solar panels PS as heat sources, the method comprising the following steps:
(a) the step of heating the secondary heating agent in the heat source PC or PS; and
b) the step of heating the primary heating agent in the accumulator AT.
c) the step of producing domestic hot water ACM

### Advantages of the invention

The main advantages of using the invention are the following:
- The liquid in the heat accumulator of the invention is permanently non-pressurized because the heat accumulator is provided with expansion space and overflow port. The overflow portand the expansion space replace the expansion vessel of the prior art. As the heat accumulator is not pressurized, i.e. it is permanently non-pressurized, there is no explosion danger. Its construction elements are not subjected to the extreme forces to which conventional heat accumulators are subjected and there is no danger of loosening/fatigue of the elements;
- The heat accumulator for the production and storage of hot water of the invention is placed inside a building wall or replaces a building wall, thus saving the occupied space of the prior art (rooms, kitchens, bathrooms, garages, technical rooms) and which can be used for other purposes. The wall of the building could be an exterior wall or an interior wall, and may even be a common wall of two rooms;
- By placing the heat accumulator inside the wall of the building or instead of the building wall, the cost of constructing technical rooms or other enclosures that are absolutely necessary for the heat accumulator of the prior art (boiler, puffer, etc.) is eliminated. The low cost of the in-wall or instead-wall location makes it cost-effective, amortizing the investment by eliminating the need to build other rooms and saving the total building space.
- By using coil wound pipes inside the heat accumulator, an equipment saving is realized as the coil wound pipes replace plate heat exchangers.

The features of the heat accumulator according to the invention determine other advantages of the invention, such as:
- This heat accumulator is compatible with any existing water heating system;
- The heat accumulator can also be placed in small kitchens, on the stairwell, etc.
- The heat accumulator is made of non-corrosive materials, making it very durable over time

### List of drawings

Other particular features and advantages of the present invention may be found in the following description of advantageous embodiments by means of the accompanying figures.
Fig. 1a is a front view of the heat accumulator of the invention;
Figs. 1b and 1c show longitudinal sections of the heat accumulator of the invention;
Fig. 2 shows the preferred example of the heat accumulator of the invention for connection in a water heating system provided with plate heat exchangers;
Figs. 3, 8 and 9 show examples of the heat accumulator of the invention provided with a coil;
Fig. 4 shows the principle hydraulic scheme of the water heating system containing solar panels and heat pump;
Fig. 5 shows the principle hydraulic scheme of the water heating system containing solar panels, heat pump and conventional gas-fired/wood-fired plant;
Fig. 6 shows the principle circuit diagram of the water heating system in the preferred example of the invention;
Fig. 7 shows an example of the heat accumulator of the invention, wherein the pipes for connecting the heat accumulator to the external equipment are branched inside the heat accumulator

### Detailed description

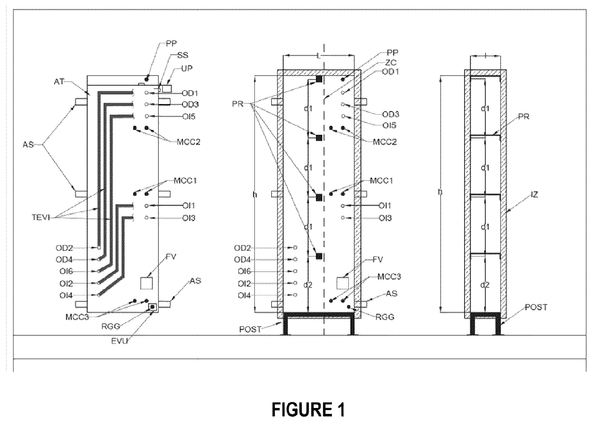

With reference to Fig. 1, a first object of the invention is a water heating system comprising:
- a heat accumulator AT for the hot water production and storage,
- a first heat exchanger SCH ACM for domestic hot water,
- a second heat exchanger SCH PC for the heat pump or a second heat exchanger SCH PS for the solar panels,
- a third heat exchanger SCH CCG for a conventional gas central heating or a third heat exchanger SCH CCL for a conventional wood-fired plant, and
- one or more heat sources: the heat pump PC, the conventional gas central heating CCG, the solar panels PS or the conventional wood central heating CCL or any other heat source.

The water heating system is configured to heat a primary heating agent in order to obtain domestic hot water.

The preferred primary heating agent is distilled water.

Throughout the description, terms expressed in the singular form representing parts of the water heating system are not restricted to the singular, but may also be plural: for example, 'heat source' could mean 'a heat source' or 'heat sources' as appropriate.

In the first preferred embodiment of the invention, as the heat exchangers are used the said plate heat exchangers, i.e. SCH ACM, SCH PC, SCH PS, SCH CCG or SCH CCL.

The exchange of heat between the primary heating agent and the cold water from the source (ARS) is carried out by external plate heat exchangers which are sized according to the flow rates and temperatures of the fluids involved in the process.

The first heat exchanger SCH ACM is a domestic hot water heat exchanger. The second heat exchanger (i.e. SCH PC or SCH PS) is either a heat exchanger for the heat pump SCH PC or a heat exchanger for the solar panels SCH PS.

The third heat exchanger (i.e. SCH CCG or SCH CCL) is either a heat exchanger for the conventional gas central heating SCH CCG or a heat exchanger for the conventional wood central heating SCH CCL.

The heat source (i.e. PC, CCG, PS or CCL) is represented by a heat pump PC, a conventional wood central heating CCL, a conventional gas central heating CCG, solar panels PS or any other heat source.

The heat accumulator AT comprises a thermally insulated, stiffened, closed casing, wherein the casing is filled with a permanently non-pressurized primary heating medium.

The casing can have a parallelepipedal shape or any other useful shape for the user. The inside of the casing is fitted with stiffening profiles PR in order to avoid deformation due to weight and/or water movement therein. The outside of the casing is provided with anti-seismic reinforcement means AS for earthquake resistance.

The claimed heat accumulator AT is configured to be mounted on a base POST.

The casing is insulated with polyurethane foam or other insulating materials and may be finished by painting and/or varnishing.

The casing also comprises command and control means.

The first heat exchanger SCH ACM is connected, on the one hand, to the heat accumulator AT via a first circulation pump PC1 located in a domestic hot water heating circuit CIA 1 and, on the other hand, to a domestic hot water consuming circuit CC ACM, which is provided with a flow sensor FLX1 and an electric outlet valve EVG.

In one example, the flow sensor FLX1 is a flow switch.

The domestic hot water consuming circuit CC ACM comprises an anti-scalding valve VAO that mixes the cold water from the source (ARS) with the domestic hot water ACM in order to protect the consumer against scalding.

The second heat exchanger (i.e. SCH PC or SCH PS) is connected on one hand to the heat accumulator AT via a second circulation pump (i.e. PR PC or PR PS), and on the other hand to the heat source (i.e. PC or PS).

The second circulation pump (i.e. PR PC or PR PS) can be a circulation pump for the heat pump PR PC or a circulation pump for the solar panels PR PS.

The third heat exchanger (i.e., SCH CCG or SCH CCL) is connected on one had to the heat accumulator AT via a third circulation pump (i.e., PR CCG or PR CCL), and on the other hand to the heat source (i.e., CCG or CCL).

The third circulation pump (i.e. PR CCG or PR CCL) may be a circulation pump for a conventional gas central heating PR CCG or a circulation pump for a conventional wood central heating PR CCL.

The heat source (i.e., PC, CCG, PS or CCL) is configured to allow the flow of a secondary heating medium, the heat source (i.e., PC, CCG, PS or CCL) being provided with a sensor for monitoring the temperature of the secondary heating agent (not shown).

In one example, the secondary heating agent may be glycol.

In the working position, the casing is configured to:
- comprise a control zone ZC located on a side face of the casing along a vertical edge of that side face. The control zone ZC is located on the side face of the casing to which an operator can have access, the area of the control zone ZC being less than or equal to the area of the respective side face. In particular, the control zone ZC is as small as possible in order to allow as much coverage as possible of said side face of the heat accumulator AT with building wall finish. The control zone ZC may be for example in the form of a rectangular strip along a vertical edge of the side face.
- allow to be filled with unheated primary heating agent through filling means EVU up to a preset filling level and to allow the heated primary heating agent to expand up to a preset expansion level between the preset filling level and an overflow port PP, said overflow port PP being located in the wall of the casing in the control zone ZC between the preset expansion level and the top face of the casing.
- contain a safety air volume between the preset filling level and the top face of the casing,
- allow the circulation of the primary heating agent through a series of circulation openings in the respective side face of the casing, as follows:
   ∘ between the heat accumulator AT and the first heat exchanger SCH ACM via a domestic hot water heating circuit CIA1, and
   ∘ between the heat accumulator AT and the second heat exchanger (i.e. SCH PC or SCH PS) via a first heating circuit for primary heating agent (i.e. CIT PC or CIT PS) and/or between the heat accumulator AT and the third heat exchanger (i.e. SCH CCG or SCH CCL) via a second heating circuit for primary heating agent (i.e. CIT CCL or CIT CCG).

In the first preferred embodiment, the filling means EVU is the electric filling valve.

The casing further comprises a float filling system UP. The float filling system UP starts filling the casing when the level of the primary heating agent drops below the preset filling level and stops filling the casing when the primary heating agent reaches the preset filling level.

The first heating circuit for primary heating agent (i.e. CIT PC or CIT PS) may be a heating circuit for primary heating agent CIT PC for the heat pump, or a heating circuit for primary heating agent CIT PS for the solar panels.

The second heating circuit for primary heating agent (i.e. CIT CCL or CIT CCG) may be a heating circuit for primary heating agent CIT CCL for the conventional wood-fired plant, or a heating circuit for primary heating agent CIT CCG for the conventional gas-fired plant.

The casing also comprises an alarm sensor SS that emits a warning signal when the level of the primary heating agent drops below the preset filling level.

The casing is made of non-corrosive materials such as stainless steel or polypropylene.

The number and role of the circulation openings are determined according to the user's needs.

The circulation openings comprise, in the first preferred embodiment of the invention, at least a primary outlet opening OD1 and a primary inlet opening OD2 for the primary heating medium:
- The primary outlet opening OD1 for the primary heating medium, corresponding to the domestic hot water heating circuit CIA1 is arranged in the upper part of the control zone ZC and is configured to be connected via a first pipe to the first circulation pump PC1 and to the first heat exchanger SCH ACM,
- The primary inlet opening OD2 for the primary heating medium, corresponding to the domestic hot water heating circuit CIA1 is arranged in the lower part of the casing, diagonally to the primary outlet opening OD1, and is configured to be connected via a second pipe with the first heat exchanger SCH ACM. The domestic hot water heating circuit CIA1 also contains a primary dirt filter FY1, fittings and vanes RSn.

In the first preferred embodiment of the invention, in addition to the primary inlet opening and the primary outlet opening, the circulation openings comprise a secondary inlet opening (i.e., OI1 or OI3) for the primary heating agent and a secondary outlet opening (i.e., OI2 or OI4) for the primary heating medium:
- The secondary heat inlet opening (i.e. OI1 or OI3) corresponding to the first heating circuit for primary heating agent (i.e. CIT PS or CIT PC) is arranged medially in the control zone ZC and is configured to be connected via a third pipe with the second heat exchanger (i.e. SCH PC or SCH PS). The secondary inlet opening OI1 of the primary heating agent belongs to the heating circuit for primary heating agent for the heat pump CIT PC, and the secondary inlet opening OI3 belongs to the heating circuit for primary heating agent for the solar panels CIT PS.
- The secondary outlet opening (i.e., OI2 or OI4) for the primary heating medium, corresponding to the first heating circuit for primary heating agent (i.e., CIT PS or CIT PC), is arranged in the lower part of the casing diagonally to the primary outlet opening OD1 and is configured to be connected via a fourth pipe with the second circulation pump (i.e., PR PC or PR PS) and with the second heat exchanger (i.e., SCH PC or SCH PS). The secondary outlet opening OI2 of the primary heating agent belongs to the heating circuit for primary heating agent for the heat pump CIT PS, and the secondary outlet opening OI4 belongs to the heating circuit for primary heating agent for the solar panels CIT PC. The first heating circuit for primary heating agent (i.e. CIT PS or CIT PC) also contains secondary dirt filters (i.e. FY2 or FY3), fittings and valves RSn.

It is important that all openings in the lower part of the casing are made as close to the bottom of the casing as possible in the working position, but not necessary in the same vertical or horizontal direction.

In the first preferred embodiment of the invention, in addition to the primary inlet opening and to the primary outlet opening, the circulation ports comprise the following openings: a tertiary inlet opening OI5 and a tertiary outlet opening OI6 for the primary heating medium:
- the tertiary inlet opening OI5 for the primary heating medium, corresponding to the second heating circuit for primary heating agent (i.e. CIT CCL or CIT CCG), is arranged in the upper part of the control zone ZC and is configured to be connected, via a fifth pipe, to the third heat exchanger (i.e. SCH CCL or SCH CCG),
- the tertiary outlet opening OI6 for the primary heating medium, corresponding to the second heating circuit for primary heating agent (i.e. CIT CCL or CIT CCG), is arranged in the lower part of the casing diagonally to the tertiary outlet opening OI5 and is configured to be connected via a sixth pipe with the third circulation pump (i.e. PR CCG or PR CCL) and with the third heat exchanger (i.e. SCH CCL or SCH CCG). The second heating circuit for primary heating agent (i.e. CIT CCL or CIT CCG) also contains secondary dirt filters (i.e. FY2 or FY3), fittings and valves RSn.

The pipes connecting the circulation openings in the upper part with those in the lower part of the casing are embedded in the accumulator insulation.

The casing further comprises an inspection slot FV arranged in the lower part of said control area ZC. In one example, the inspection slot FV is of the cover type with rubber gasket.

The temperature command and control means comprises a thermometer and a control probe.

The temperature command and control means comprise:
- a set of temperature command and control means MCC1 of the heat accumulator AT mounted in the middle part of the control zone ZC,
- additional measuring sets placed in various places on the casing in order to check the accuracy of the temperature measurement by the MCC1.

The additional measuring sets are connected to the temperature command and control means set MCC1 and are selected unlimitedly from:
- an upper temperature check set MCC2 placed in the upper part of the casing and/or
- a lower temperature check set MCC3 placed in the lower part of the casing and/or
- an electronic processing and control unit which may be a computer, controller, microcontroller (application specific integrated circuit (abbreviated as "ASIC") or field programmable gate array (abbreviated as "FPGA")).

In the working position, the casing is configured to allow the safety air volume to escape from the casing through the overflow port PP in order to maintain the primary heating agent in non-pressurized form. The overflow port PP is connected via a flexible or rigid (fixed) connection to the drain line.

When the primary heating agent level drops below the preset filling level, the electric filling valve EVU is controlled by the float filling system UP and allows the casing to be filled with additional primary heating agent in order to reach the preset filling level. In case the electric filling valve EVU does not receive the command from the float filling system UP and the level of the primary heating agent does not increase up to the preset filling level, the water filling monitoring sensor SS senses the low level of the primary heating agent in the heat accumulator and command to interrupt the water heating system function.
The float filling system is located at a preferred distance of 5 cm, 10 cm, 15 cm, 20 cm, 25 cm or 30 cm from the upper face of the casing, as required.

For maintenance, the accumulator is drained via a drain vane RGG.

The accumulator is variable in size, depending on the usage requirements. The case can have a volume, selected in an unlimited way from the following options: 300 liters, 500 liters or 1000 liters.

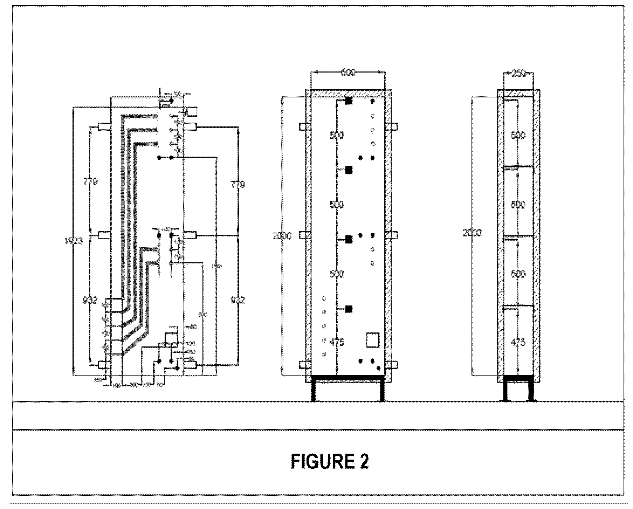

As illustrated in Fig. 2, in a preferred example, wherein the water heating system is provided with plate heat exchangers, the heat accumulator AT has the following features:
- the overflow port PP is located at least 1 cm from the top of the casing and 10 cm from the vertical edge of the respective side face, connected to the drain line via a flexible or rigid (fixed) connection.
- the casing volume: 300 liters
- the casing size without thermal insulation: L × W × H = 600 × 250 × 2000 mm
- the casing size with 50 mm thick thermal insulation: L × W × H = 700 × 350 × 2100 mm
- the distance between stiffening profiles: d₁ = 500 mm, d₂ = 475 mm
- the distance between two consecutive circulation openings in the lower part of the casing: 100 mm
- the distance between two consecutive circulation openings in the upper part of the casing: 100 mm
- the circulation openings diameter: 1 inch
- the overflow port PP diameter: 11/2 inches
- the dimensions of the inspection slot FV: L × I = 100 × 100 mm
- polyurethane foam or other insulating materials are at least 5 cm thick

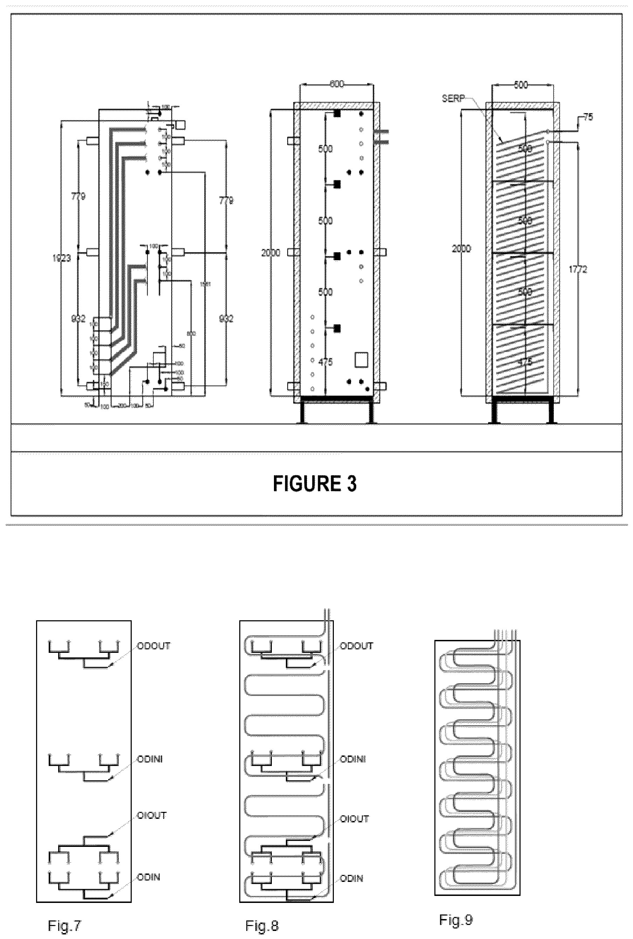

As illustrated in Fig. 3, in one example, wherein the water heating system is provided with a coil, the heat accumulator AT has the following characteristics:
- the casing volume: 300 liters
- the casing size without thermal insulation: L × l × h = 600 × 500 × 2000 mm
- the casing size with 50 mm thick thermal insulation: L × l × h = 700 × 600 × 2100 mm

In a second aspect of the invention, there is disclosed a water heating system according to the first object of the invention, further comprising an electronic processing and control unit (not graphically shown) connected to the set of temperature command and control means MCC1 and configured to control the said water heating system function. Specifically, the step of heating the primary heating agent in the heat accumulator AT and the step of obtaining the domestic hot water ACM are implemented by means of said electronic processing and control unit.

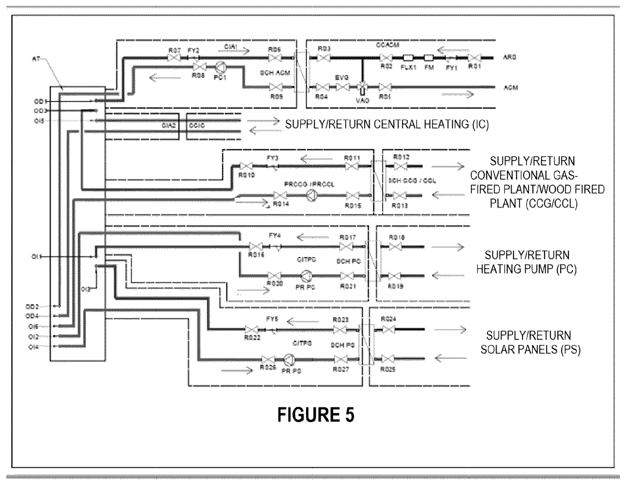

With reference to Fig. 5, in a third aspect of the invention, there is disclosed a water heating system according to the first object of the invention, wherein the water heating system is configured to heat the primary heating agent in order to obtain hot water for central heating of a building.

In the third aspect of the invention, the casing is further configured to allow the primary heating agent to flow through a plurality of openings of the casing, connected to a corresponding plurality of pipes forming a water heating circuit, for a building central heating CIA 2.

The water heating circuit for the building central heating CIA 2 is formed in an unlimited way by the underfloor heating circuit and/or the radiator heating circuit.

In the third aspect of the invention, in the working position, the casing further comprises on said side face a quaternary outlet opening OD3 for the heating medium and a quaternary inlet opening OD4 for the heating medium.

The quaternary outlet opening OD3 for the heating medium, corresponding to the water heating circuit for the building central heating CIA 2, is arranged in the upper part of the control zone ZC and is configured to be connected via a seventh pipe to a fourth circulation pump (i.e. PC5 - not graphically shown) and to a fourth heat exchanger (i.e. SCH IC - not graphically shown).

The quaternary inlet opening OD4 for the heating medium, corresponding to the water heating circuit for the building central heating CIA 2, is arranged in the lower part of the casing, diagonally with respect to the quaternary outlet opening OD4, and is configured to be connected via an eighth pipe with the fourth heat exchanger SCH IC.

In a fourth aspect of the invention, a water heating system is disclosed, wherein the circulation openings in the casing comprise a discharging outlet opening ODOUT for the primary heating medium, a discharging inlet opening ODIN for the primary heating medium, a charging inlet opening OINI for the primary heating agent and a charging outlet opening OIOUT for the primary heating medium.

The discharging outlet opening ODOUT for the primary heating agent corresponding to the domestic hot water heating circuit CIA1 is arranged in the upper part of the casing and is configured to be connected via a first pipe to the first circulation pump PC1 and to the first heat exchanger SCH ACM,

The first pipe is branched into at least two evenly distributed branches inside the heat accumulator. The first pipe may be branched into 2, 4, 6, 8, 10 or 12 branches, for example.

The advantage of these branches lies in the constant maintenance of the temperature difference of the primary heat agent between the upper and the lower part of the heat accumulator, by uniform distributing the flow of the primary heating agent inside the heat accumulator.

The discharging inlet opening ODIN for the primary heating agent corresponding to the domestic hot water heating circuit CIA1 is arranged in the lower part of the casing and is configured to be connected via a second pipe with the first heat exchanger SCH ACM.

The second pipe is branched into at least two evenly distributed branches inside the heat accumulator.

The second pipe is branched into at least two evenly distributed branches inside the heat accumulator. The second pipe may be branched into 2, 4, 6, 8, 10 or 12 branches, for example.

The advantage of these branches lies in the constant maintenance of the temperature difference of the primary heat agent between the upper and the lower part of the heat accumulator, by uniform distributing the flow of the primary heating agent inside the heat accumulator.

The charging inlet opening OINI for the primary heating agent is arranged in the middle part of the casing and it corresponds to the first and/or the second heating circuit CIT PC, CIT PS, CIT CCL, CIT CCG for the primary heating medium.

A third pipe passes through the charging inlet opening OINI for the primary heating medium, said third pipe being branched into at least two evenly distributed inner branches inside the heat accumulator and into at least two outer branches outside the heat accumulator. The third pipe may be branched, for example, into a number of 2, 4, 6, 8, 10 or 12 inner branches and into a number of 2, 3 or 4 outer branches.

The charging inlet opening OINI for the primary heating agent is configured to be connected via at least one outer branch of the third pipe to the second heat exchanger SCH PC, SCH PS, SCH CCL, SCH CCG.

The charging outlet opening OIOUT for the primary heating medium, corresponding to the first and/or second heating circuit for primary heating agent CIT PS, CIT PC, CIT CCL, CIT CCG, is arranged in the lower part of the casing.

A fourth pipe passes through the charging outlet opening OIOUT for the primary heating medium, said fourth pipe being branched into at least two evenly distributed inner branches inside the heat accumulator and into at least two outer branches outside the heat accumulator. The fourth pipe may be branched, for example, into a number of 2, 4, 6, 8, 10 or 12 inner branches and into a number of 2, 3 or 4 outer branches.

The charging outlet opening OIOUT for the primary heating agent is configured to be connected via at least one outer branch of the fourth pipe to the second circulation pump PR PC, PR PS, PR CCL, PR CCG and to the second heat exchanger SCH PC, SCH PS, SCH CCL, SCH CCG.

The discharging outlet opening ODOUT for the primary heating medium, the discharging inlet opening ODIN for the primary heating medium, the charging inlet opening OINI for the primary heating agent and the charging outlet opening OIOUT for the primary heating agent are arranged on the same vertical.

With reference to Fig. 5, the first embodiment of the invention is shown, comprising the water heating system according to the first object or the second aspect of the invention, wherein the heat source comprises the heat pump PC and/or the conventional gas central heating CCG.

The first embodiment of the invention comprises three examples (namely the first, second and third example) as follows:
- the first example is represented by the water heating system according to the first object or the second aspect of the invention, wherein the heat source comprises the heat pump PC. Accordingly, the first example comprises the domestic hot water heating circuit CIA1 and the heating circuit for primary heating agent for the heat pump CIT PC.
- the second example is represented by the water heating system according to the first object or the second aspect of the invention, wherein the heat source comprises the conventional gas central heating CCG. Accordingly, the second example comprises the domestic hot water heating circuit CIA1 and the heating circuit for primary heating agent for the conventional gas central heating CIT CCG.
- the third example is represented by the water heating system according to the first object or the second aspect of the invention, wherein the heat source comprises the heat pump PC and the conventional gas central heating CCG. Accordingly, the third example comprises the domestic hot water heating circuit CIA1, the heating circuit for primary heating agent for the heat pump CIT PC and the heating circuit for primary heating agent for the conventional gas central heating CIT CCG.

With reference to Fig. 5, the second embodiment of the invention is shown, comprising the water heating system according to the first object or the second aspect of the invention, wherein the heat source comprises solar panels PS and/or the conventional wood central heating CCL.

The second embodiment of the invention comprises three further examples (more specifically fourth, fifth and sixth example) as follows:
- the fourth example is represented by the water heating system according to the first object or the second aspect of the invention, wherein the heat source comprises solar panels PS. Accordingly, the fourth example comprises the domestic hot water heating circuit CIA1 and the heating circuit for primary heating agent for solar panels CIT PS.
- the fifth example is represented by the water heating system according to the first object or the second aspect of the invention, wherein the heat source comprises the conventional wood central heating CCL. Accordingly, the fifth example comprises the domestic hot water heating circuit CIA1 and the heating circuit for primary heating agent for the conventional wood central heating CIT CCL.
- the sixth example is represented by the water heating system according to the first object or the second aspect of the invention, wherein the heat source comprises solar panels PS and the conventional wood central heating CCL. Accordingly, the sixth example comprises the domestic hot water heating circuit CIA1, the heating circuit for primary heating agent for solar panels CIT PS and the heating circuit for primary heating agent for the conventional wood central heating CIT CCL.

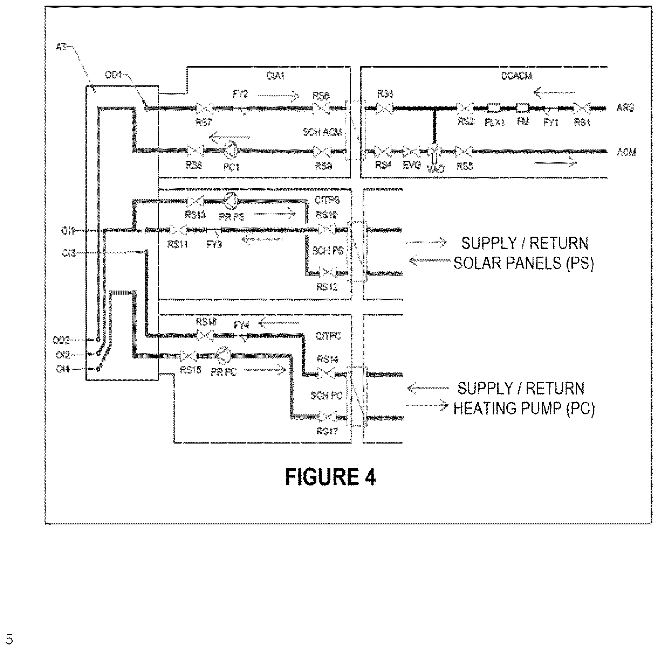

With reference to Figs. 4 and 5, the third embodiment of the invention is shown, comprising the water heating system according to any one of the first object, the second aspect or the third aspect of the invention, wherein the heat source is a combination of heat pump PC and solar panels PS.

A fourth embodiment of the invention comprises the water heating system according to the third aspect of the invention, wherein the heat source is a combination of heat pump PC and the conventional gas central heating CCG.

A fifth embodiment of the invention comprises the water heating system according to the third aspect of the invention, wherein the heat source is a combination of solar panels PS and the conventional wood central heating CCL.

A sixth embodiment of the invention comprises the water heating system according to any one of the first object, the second aspect or the third aspect of the invention, wherein the heat source is a combination of heat pump PC, solar panels PS, the conventional gas central heating CCG and the conventional wood central heating CCL.

In a fifth aspect of the invention, the water heating system comprises the following elements, in addition to the first object and the second aspect of the invention:
at least one first pipe in the form of a coil inside the heat accumulator, configured to allow circulation of the secondary heating medium, and
at least one second pipe in the form of a coil inside the heat accumulator, configured to allow circulation of cold water from the source ARS.

The first coil wound pipe is configured to be connected with a heat source PC, CCG, PS, CCL for the purpose of heating or cooling the primary heating medium. The second coil wound pipe is configured to be connected with a source of cold water ARS for the purpose of heating the cold water ARS for the purpose of obtaining domestic hot water ACM.

The inlet end and the outlet end of the first and second coil wound pipes are located at the upper part of the heat accumulator.

By using coil wound pipes inside the accumulator, equipment savings are achieved, as coil wound pipes replace plate heat exchangers.

The coil wound pipes are sized according to the flow rates and temperatures of the fluids involved in operating.

With reference to Fig. 9, in an example, the water heating system may comprise only the first and second pipes in the form of a coil for the purpose of heating the cold water from the source ARS in order to obtain domestic hot water ACM.

In the sixth aspect of the invention, there is disclosed a building wall containing the heat accumulator AT in the system according to any of the objects, aspects, embodiments and examples mentioned above.

The building wall may be an exterior wall or an interior wall of the said building.

In a seventh embodiment, said building wall may be made entirely of said heat accumulator AT, said control zone ZC being the only accessible part of said heat accumulator AT

In an eighth embodiment, only a portion of said building wall may contain said heat accumulator AT, the rest of said building wall comprising a conventional wall structure, the control zone ZC also being the only accessible part of said heat accumulator AT

In the second object of the invention is shown a method of filling the AT accumulator casing with the primary heating medium, said AT accumulator casing filling method being a pre-operating method and comprising the filling of the AT accumulator casing with the primary heating agent by filling means EVU up to the preset filling level.

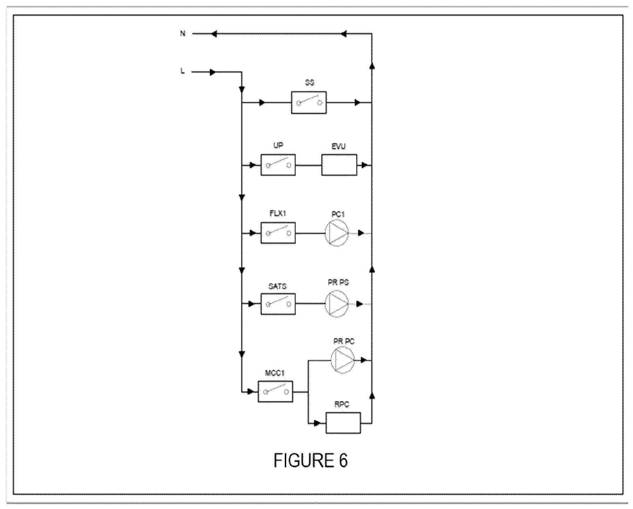

With reference to Fig. 6, there is shown the first alternative of the third object of the invention comprising a method of heating water using the water heating system according to the first object, the third aspect, the fourth aspect, the second embodiment or the fourth embodiment, the method comprising the following steps of:
a) heating the primary heating agent in the accumulator AT, wherein:
   a1) the set of temperature command and control means MCC1 senses the primary heating agent temperature drops below a preset minimum temperature T1min
   a2) the set of temperature command and control means MCC1 controls both the start of the heat source (i.e. PC or CCG) via a relay and the start of the second circulation pump (i.e. PR PC or PR CCG).
   (a3) the secondary heating agent transfers its heat to the primary heating agent via the second heat exchanger (i.e. SCH PC or SCH CCG) until the temperature measured by the set of temperature command and control means MCC1 becomes equal to the preset minimum temperature T1min.
   a4) the set of temperature command and control means MCC1 controls both the stop of the heat source (i.e. PC or CCG) via a relay and the stop of the second circulation pump (i.e. PR PC or PR CCG)
b) producing of the domestic hot water (ACM), wherein:
   b1) the flow sensor FLX1 detects whether there is flow in the domestic hot water consuming circuit CC ACM
   b2) the flow sensor FLX1 controls the start of the first circulation pump PC1 in the domestic hot water heating circuit CIA1,
   (b3) the primary heating agent in the domestic hot water heating circuit CIA1 transfers its heat to the domestic hot water consuming circuit CC ACM via the first heat exchanger SCH ACM,
   b4) when the flow sensor FLX1 detects the lack of flow in the domestic hot water consuming circuit CC ACM, the flow sensor FLX1 commands the first circulation pump PC1 to stop.

In an example, T1min is 45°C.

The second alternative of the third object of the invention comprises a method for using the water heating system using the water heating system according to the first object, the third aspect, the fourth aspect or the third embodiment, the method comprising the following steps of:
a) heating of the primary heating agent in the accumulator AT, wherein:
   (a1) the secondary heating agent temperature monitoring sensor in the heat source (i.e. PS or CCL) senses the secondary heating agent temperature increase above a preset minimum temperature T2min,
   a2) the secondary heating agent temperature monitoring sensor commands the start of the second circulation pump (i.e. PC PS or PC CCL),
   (a3) the secondary heating agent transfers its heat to the primary heating agent via the second heat exchanger (i.e. SCH PS or SCH CCL) until the temperature of the secondary heating agent drops below the preset minimum temperature T2min,
   a4) when the set of temperature command and control means MCC1 senses that the temperature of the primary heating agent reaches a preset maximum temperature Tmax, the set of temperature command and control means MCC1 commands the opening of the electric outlet valve EVG in the domestic hot water consuming circuit CC ACM, in order to discharge the domestic hot water ACM.
b) obtaining of the domestic hot water ACM, wherein:
   b1) the flow sensor FLX1 detects whether there is flow in the domestic hot water consuming circuit CC ACM,
   b2) the said flow sensor FLX1 controls the start of the first circulation pump PC1 in the domestic hot water heating circuit CIA 1,
   (b3) the primary heating agent in the domestic hot water heating circuit CIA 1 transfers its heat to the domestic hot water consuming circuit CC ACM via the first heat exchanger SCH ACM,
   b4) when the flow sensor FLX1 detects the lack of flow in the domestic hot water consuming circuit CC ACM, the flow sensor FLX1 commands the first circulation pump PC1 to stop.

In an example, Tmax is 80°C.

The third alternative of the third object of the invention comprises a method for using the water heating system using the water heating system according to the first object, the third aspect, the fourth aspect or the third embodiment, the method comprising the following steps of:
a) heating the primary heating agent in the accumulator AT, wherein:
   a1) the secondary heating agent temperature monitoring sensor SATS in the heat source PS senses the secondary heating agent temperature increase above a preset minimum temperature T2min,
   a2) the secondary heating agent temperature monitoring sensor controls the start of the second circulation pump (i.e. PR PCor PR PS),
   (a3) the secondary heating agent transfers its heat to the primary heating agent via the second heat exchanger SCH PS until the temperature of the secondary heating agent falls below the preset minimum temperature T2min,
   a4) when the set of temperature command and control means MCC1 senses that the temperature of the primary heating agent reaches the preset maximum temperature Tmax, the set of temperature command and control means MCC1 commands the opening of the electric outlet valve EVG for the discharge of domestic hot water ACM
b) heating of the primary heating agent in the accumulator AT, wherein:
   (b1) the set of temperature command and control means MCC1 senses the temperature of the primary heating agent falling below a preset minimum temperature T1 min,
   b2) the set of temperature command and control means MCC1 controls both the starting of the heat source PC and the starting of the second circulation pump PR PC,
   (b3) the secondary heating agent transfers its heat to the primary heating agent via the second heat exchanger SCH PC until the temperature measured by the set of temperature command and control means (MCC1) becomes equal to the preset minimum temperature T1min,
   b4) the set of temperature command and control means MCC1 controls both the switching off of the heat source PC and the switching off of the second circulation pump PR PC.
c) obtaining of the domestic hot water ACM where:
   c1) the flow sensor FLX1 detects whether there is flow in the domestic hot water consuming circuit CC ACM,
   c2) the said flow sensor FLX1 controls the start of the first circulation pump PC1 in the domestic hot water heating circuit CIA 1,
   c3) the primary heating agent in the domestic hot water heating circuit CIA 1 transfers its heat to the domestic hot water consuming circuit CC ACM via the first heat exchanger SCH ACM,
   c4) when the flow sensor FLX1 detects the lack of flow in the DH ACM consuming circuit, the flow sensor FLX1 commands the first circulation pump PC1 to stop.

In a fourth object there is disclosed a method according to any one of the three alternatives of the third object of the invention, wherein the step of heating the primary heating agent in the heat accumulator AT and the step of obtaining domestic hot water ACM are implemented with the aid of the electronic processing unit mentioned in the second aspect of the invention.

Although certain embodiments of the present invention have been described in detail, the person skilled in the art will recognize various alternative embodiments for implementing the invention as defined in the claims.

### LIST OF REFERENCES

AT- heat accumulator
SCH ACM - the first heat exchanger
SCH PC, SCH PS - the second heat exchanger
SCH CCG, SCH CCL - the third heat exchanger
PC, CCG, PS, CCL - heat source
PC1 - the first circulation pump
CIA1 - domestic hot water heating circuit
CC ACM - domestic hot water consuming circuit
CC IC - consuming circuit for the central heating
FLX1- flow sensor
EVG) - electric outlet valve
PR PC, PR PS - the second circulation pump
PR CCG, PR CCL - the third circulation pump
ZC - the control zone
PP - overflow port
CIT PC, CIT PS - the first heating circuit for primary heating medium
CIT CCL, CIT CCG - the second heating circuit for primary heating agent
OD1- primary outlet opening
OD2 - primary inlet opening
OI1, OI3 - secondary inlet opening
OI2, OI4 - secondary outlet opening
OI5 - tertiary inlet opening
OI6 - tertiary outlet opening
MCC1 - set of temperature command and control means
MCC2 - temperature checking superior set
MCC3 - temperature checking lower set
OD3 - quaternary outlet opening
CIA 2 - water heating circuit for a building central heating
PC5 - fourth circulation pump - not graphically shown
SCH IC - fourth heat exchanger - not graphically shown
OD4 - quaternary inlet opening
PC - heat pump
CCG - conventional gas central heating
PS - solar panels
CCL - conventional wood central heating
PR - stiffening profiles
IZ - thermal insulation
POST - base
UP - float filling system
SS - alarm sensor
FV - inspection slot
RGG - accumulator drain vane
AS - anti-seismic strengthening means
SERP - coil
VAO - anti-scalding valve
ARS - source of cold water
RSn - tap
FY1 - primary dirt filter
FY2, FY3 - secondary dirt filter
FM - magnetic filter
EVU - filling means
SATS - secondary heating agent temperature monitoring sensor
RPC - heat pump control relay
L - length of the heat accumulator
I - width of the heat accumulator
h - height of the heat accumulator
d1, d2 - distance between stiffening profiles
ODOUT - discharging outlet opening for the primary heating medium
ODIN - discharging inlet opening for the primary heating medium
OINI - charging inlet opening for the primary heating medium
OIOUT - charging outlet opening for the primary heating medium

## Claims

1. A water heating system **characterized in that** it comprises a heat accumulator (AT), a first heat exchanger (SCH ACM), a second heat exchanger (SCH PC, SCH PS), a third heat exchanger (SCH CCG, SCH CCL) and one or more heat sources (PC, CCG, PS, CCL),
wherein:
- the heat accumulator (AT) comprises:
∘ a closed, stiffened and thermally insulated, parallelepipedal casing, filled with a permanently non-pressurized primary heating medium, and
∘ one or more command and control means,
- the first heat exchanger (SCH ACM) is connected, on the one hand, to the heat accumulator (AT) via a first circulation pump (PC1) located in a domestic hot water heating circuit (CIA 1) and, on the other hand, to a domestic hot water consuming circuit (CC ACM), which is provided with a flow sensor (FLX1) and an electric outlet valve (EVG)
- the second heat exchanger (SCH PC, SCH PS) is connected on one hand to the heat accumulator (AT) via a second circulation pump (PR PC, PR PS) and on the other hand to the heat source (PC, PS)
- the third heat exchanger (SCH CCG, SCH CCL) is connected on one hand to the heat accumulator (AT) via a third circulation pump (PR CCG, PR CCL) and on the other hand to the heat source (CCG, CCL)
- the heat source (PC, CCG, PS, CCL) is configured to allow the flow of a secondary heating medium, the heat source (PC, CCG, PS, CCL) being provided with a monitoring sensor of the temperature of the secondary heating medium,
*and wherein:*
in working position, the casing is configured to:
- comprise a control zone (ZC) located on a side face of the casing along a vertical edge of that face,
- allow to be filled with the unheated primary heating agent via filling means (EVU) up to a preset filling level and to allow the expansion of the heated primary heating agent up to a preset expansion level between the preset filling level and an overflow port (PP), said overflow port (PP) being located in the wall of the casing in the control zone (ZC) between the preset expansion level and the top face of the casing,
- contain a safety air volume between the preset filling level and the top face of the casing,
- allow the circulation of the primary heating agent through a series of circulation openings in the respective side face of the casing as follows:
∘ between the heat accumulator (AT) and the first heat exchanger (SCH ACM) via a domestic hot water heating circuit (CIA1), and
∘ between the heat accumulator (AT) and the second heat exchanger (SCH PC, SCH PS) via a first heating circuit for primary heating agent (CIT PC, CIT PS) and/or between the heat accumulator (AT) and the third heat exchanger (SCH CCG, SCH CCL) via a second heating circuit for primary heating agent (CIT CCL, CIT CCG)
*and wherein:*
the one or more command and control means comprise a set of temperature command and control means (MCC1) in the heat accumulator (AT) mounted in the middle part of the control zone ZC,
*and wherein:*
in the working position, the casing is configured to allow the safety air volume in the casing to escape through the overflow port (PP) in order to maintain the primary heating agent in non-pressurized form,
the heat accumulator (TA) is configured to be mounted inside or instead of a building wall *and*
the water heating system is configured to heat the primary heating agent in order to obtain domestic hot water.

2. The water heating system according to claim 1 further comprising an electronic processing and controlling unit connected to the set of temperature command and control means (MCC1) and configured to control the operating of said water heating system.

3. The water heating system according to claim 1 or 2, wherein the casing is further configured to allow the flow of the primary heating agent through a plurality of openings of the casing connected to a corresponding plurality of pipes forming a water heating circuit for a building central heating (CIA 2),
the casing additionally comprising on said side face, in working position:
e a quaternary outlet opening (OD3) for the heating medium corresponding to the water heating circuit for the building central heating (CIA 2), the quaternary outlet opening (OD3) being located in the upper part of the control zone (ZC) and configured to be connected via a seventh pipe to a fourth circulation pump (PC5) and to a fourth heat exchanger (SCH IC),
∘ a quaternary inlet opening (OD4) for the heating medium corresponding to the water heating circuit for the building central heating (CIA 2), the quaternary inlet opening (OD4) being located in the lower part of the casing, diagonally to the quaternary outlet opening (OD4), and configured to be connected via an eighth pipe with a fourth heat exchanger (SCH IC)
*wherein:*
- the heat accumulator (AT) is configured to be mounted inside or instead of a building wall *and*
- the water heating system is configured to heat the primary heating agent in order to obtain hot water for a building central heating.

4. The water heating system according to claims 1 or 2, wherein the circulation openings of the casing comprise:
- a discharging outlet opening (ODOUT) for the primary heating agent corresponding to the domestic hot water heating circuit (CIA1), the discharging outlet opening (ODOUT) being located in the upper part of the casing and configured to be connected via a first pipe to the first circulation pump (PC1) and to the first heat exchanger (SCH ACM),
∘ wherein the first pipe is branched into at least two evenly distributed branches inside the heat accumulator
- a discharging inlet opening (ODIN) for the primary heating agent corresponding to the domestic hot water heating circuit (CIA1), the discharging inlet opening (ODIN) being located in the lower part of the casing and configured to be connected via a second pipe with the first heat exchanger (SCH ACM),
∘ wherein the second pipe is branched into at least two evenly distributed branches inside the heat accumulator
- a charging inlet opening (OINI) for the primary heating agent located in the middle part of the casing and corresponding to the first and/or second heating circuit for primary heating agent (CIT PC, CIT PS, CIT CCL, CIT CCG),
∘ wherein a third pipe passes through the charging inlet opening (OINI) for the primary heating medium, said third pipe being branched into at least two evenly distributed inner branches inside the heat accumulator and into at least two outer branches outside the heat accumulator
∘ and wherein the charging inlet opening (OINI) for the primary heating agent is configured to be connected via at least one outer branch of the third pipe to the second heat exchanger (SCH PC, SCH PS, SCH CCL, SCH CCG),
- a charging outlet opening (OIOUT) for the primary heating medium, corresponding to the first and/or the second heating circuit for primary heating agent (CIT PS, CIT PC, CIT CCL, CIT CCG) located in the lower part of the casing,
∘ wherein a fourth pipe passes through the charging outlet port (OIOUT) for the primary heating medium, said fourth pipe being branched into at least two evenly distributed inner branches inside the heat accumulator and into at least two outer branches outside the heat accumulator
∘ and wherein the charging outlet opening (OIOUT) for the primary heating agent is configured to be connected via at least one outer branch of the fourth pipe to the second circulation pump (PR PC, PR PS, PR CCL, PR CCG) and to the second heat exchanger (SCH PC, SCH PS, SCH CCL, SCH CCG),
and wherein
∘ the discharging outlet opening (ODOUT) for the primary heating medium, the discharging inlet opening (ODIN) for the primary heating medium, the charging inlet opening (OINI) for the primary heating agent and the charging outlet opening (OIOUT) for the primary heating agent are arranged on the same vertical line.

5. The water heating system according to claim 1 or 2, wherein the heat source comprises the heat pump (PC) and/or the conventional gas central heating (CCG).

6. The water heating system according to claim 1 or 2, wherein the heat source comprises solar panels (PS) and/or the conventional wood central heating (CCL).

7. The system according to any one of claims 1, 2 or 3, wherein the heat source is a combination of a heat pump (PC) and solar panels (PS).

8. The system according to claim 3, wherein the heat source is a combination of the heat pump (PC) and the conventional gas central heating (CCG).

9. The system according to any one of claims 1, 2 or 3, comprising the combination of all heat sources, namely the heat pump (PC), the solar panels (PS), the conventional gas central heating (CCG) and the conventional wood central heating (CCL).

10. The water heating system of claim 1 or 2, further comprising:
- at least one first pipe in the form of a coil inside the heat accumulator, configured to allow circulation of the secondary heating medium, and
- at least one second pipe in the form of a coil inside the heat accumulator, configured to allow the circulation of cold water from the source (ARS),
wherein
the first coil pipe is configured to be connected with a heat source (PC, CCG, PS, CCL) for the purpose of heating or cooling the primary heating medium,
and wherein
the second coil pipe is configured to be connected to a source of cold water (ARS) for the purpose of heating cold water (ARS) in order to obtain domestic hot water (ACM) and wherein the inlet end and the outlet end of the first and second coil pipes are located in the upper part of the heat accumulator.

11. A building wall containing the heat accumulator (AT) of the system according to any one of claims 1 to 10.

12. A method of filling the accumulator (AT) casing with the primary heating agent comprising the filling of the accumulator (AT) casing with the primary heating agent up to a predetermined filling level using the filling means (EVU).

13. A method of heating water using the water heating system according to any one of claims 1, 3, 4, 5 or 8, the method comprising the steps of:
a) heating the primary heating agent in the heat accumulator (AT), wherein:
a1) the set of temperature command and control means (MCC1) senses the drop of temperature of the primary heating agent below a predetermined minimum temperature T1min
a2) the set of temperature command and control means (MCC1) controls both the start of the heat source (PC, CCG) and the start of the second circulation pump (PC3) (PR PC, PR CCG)
a3) the secondary heating agent transfers its heat to the primary heating agent via the second heat exchanger (SCH PC, SCH CCG) until the temperature measured by the set of temperature command and control means (MCC1) becomes equal to the predetermined minimum temperature T1min.
a4) the set of temperature command and control means (MCC1) controls both the stop of the heat source (PC, CCG) and the stop of the second circulation pump (PC3) (PR PC, PR CCG)
b) producing the domestic hot water (ACM), wherein:
b1) the flow sensor (FLX1) detects whether there is flow in the domestic hot water consuming circuit (CC ACM)
b2) the flow sensor (FLX1) controls the start of the first circulation pump (PC1) in the domestic hot water heating circuit (CIA1)
(b3) the primary heating agent in the domestic hot water heating circuit (CIA1) transfers its heat to the domestic hot water consuming circuit (CC ACM) via the first heat exchanger (SCH ACM)
b4) when the flow sensor (FLX1) detects the lack of flow in the domestic hot water consuming circuit (CC ACM), the flow sensor (FLX1) commands the stop of the first circulation pump (PC1).

14. A method of using the water heating system according to any one of claims 1, 3, 4 or 6, the method comprising the steps of:
a) heating the primary heating agent in the heat accumulator (AT), wherein:
a1) the monitoring sensor of temperature of the secondary heating agent of the heat source (PS, CCL) senses the secondary heating agent temperature increase above a predetermined minimum temperature T2min,
a2) the monitoring sensor of temperature of the secondary heating agent commands the start of the second circulation pump (PC PS, PC CCL)
a3) the secondary heating agent transfers its heat to the primary heating agent via the second heat exchanger (SCH PS, SCH CCL) until the temperature of the secondary heating agent drops below the predetermined minimum temperature T2min
(a4) when the set of temperature command and control means (MCC1) senses that the temperature of the primary heating agent reaches a predetermined maximum temperature Tmax, the set of temperature command and control means (MCC1) commands the opening of the electric outlet valve (EVG) for the discharge of domestic hot water (ACM)
b) obtaining of domestic hot water ACM, wherein:
b1) the flow sensor (FLX1) detects whether there is flow in the domestic hot water consuming circuit (CC ACM)
b2) the said flow sensor (FLX1) controls the start of the first circulation pump (PC1) of the domestic hot water heating circuit (CIA 1)
(b3) the primary heating agent in the domestic hot water heating circuit (CIA 1) transfers its heat to the domestic hot water consuming circuit (CC ACM) via the first heat exchanger (SCH ACM)
b4) when the flow sensor (FLX1) detects the lack of flow in the domestic hot water consuming circuit (CC ACM), the flow sensor (FLX1) commands the stop of the first circulation pump (PC1).

15. A method of using the water heating system according to rev 1, 3, 4 or 7, the method comprising the following steps:
a) heating the secondary heating agent of the heat source (PS, PC), wherein:
a1) the monitoring sensor of the temperature of the secondary heating agent (SATS) of the heat source (PS) senses the secondary heating agent temperature increase above a predetermined minimum temperature T2min,
a2) the monitoring sensor of the temperature of the secondary heating agent commands the start of the second circulation pump (PR PC, PR PS)
a3) the secondary heating agent transfers its heat to the primary heating agent via the second heat exchanger (SCH PS) until the temperature of the secondary heating agent drops below the predetermined minimum temperature T2min,
a4) when the set of temperature command and control means (MCC1) senses that the temperature of the primary heating agent reaches the predetermined maximum temperature Tmax, the set of temperature command and control means (MCC1) command the opening of the electric outlet valve (EVG) for the discharge of domestic hot water (ACM)
b) heating of the primary heating agent of the heat accumulator (AT), wherein:
b1) the set of temperature command and control means (MCC1) senses the temperature of the primary heating agent decreases below a predetermined minimum temperature T1min
b2) the set of temperature command and control means (MCC1) commands both the start of the heat source (PC) and the start of the second circulation pump (PR PC)
b3) the secondary heating agent transfers its heat to the primary heating agent via the second heat exchanger (SCH PC) until the temperature measured by the set of temperature command and control means (MCC1) becomes equal to the predetermined minimum temperature T1min.
b4) the set of temperature command and control means (MCC1) commands both the stop of the heat source (PC) and the stop of the second circulation pump (PR PC)
c) obtaining of domestic hot water ACM, wherein:
c1) the flow sensor (FLX1) detects whether there is flow in the domestic hot water consuming circuit (CC ACM)
c2) the said flow sensor (FLX1) controls the start of the first circulation pump (PC1) of the domestic hot water heating circuit (CIA 1)
c3) the primary heating agent of the domestic hot water heating circuit (CIA 1) transfers its heat to the domestic hot water consuming circuit (CC ACM) via the first heat exchanger (SCH ACM)
c4) when the flow sensor (FLX1) detects a lack of flow in the domestic hot water consuming circuit (CC ACM), the flow sensor (FLX1) commands the first circulation pump (PC1) to stop.
